Europäisches Patentamt

European Patent Office

Office européen des brevets

(19)

(11) Veröffentlichungsnummer : **0 489 022 B1**

(12) **EUROPÄISCHE PATENTSCHRIFT**

(45) Veröffentlichungstag der Patentschrift :
28.09.94 Patentblatt 94/39

(51) Int. Cl.⁵ : **G06F 7/62,** G06F 7/68, F02P 5/04

(21) Anmeldenummer : **90910110.7**

(22) Anmeldetag : **12.07.90**

(86) Internationale Anmeldenummer :
**PCT/DE90/00524**

(87) Internationale Veröffentlichungsnummer :
**WO 91/03015 07.03.91 Gazette 91/06**

(54) ELEKTRONISCHER ZÄHLER.

(30) Priorität : **24.08.89 DE 3927967**

(43) Veröffentlichungstag der Anmeldung :
**10.06.92 Patentblatt 92/24**

(45) Bekanntmachung des Hinweises auf die
Patenterteilung :
**28.09.94 Patentblatt 94/39**

(84) Benannte Vertragsstaaten :
**DE ES FR IT**

(56) Entgegenhaltungen :
**DE-A- 2 415 939**
**FR-A- 1 371 803**

(73) Patentinhaber : **ROBERT BOSCH GMBH**
**Postfach 30 02 20**
**D-70442 Stuttgart (DE)**

(72) Erfinder : **HOLZINGER, Otto**
**Sudetenstrasse 45**
**D-7321 Eschenbach (DE)**

Erfinder : **BORST, Wolfgang**
**Stresemannstrasse 11**
**D-7150 Backnang (DE)**
Erfinder : **KLENK, Martin**
**Stresemannstrasse 11**
**D-7150 Backnang (DE)**
Erfinder : **LOEWL, Wolfgang**
**Gartenstrasse 34**
**D-7142 Marbach (DE)**
Erfinder : **BREUSER, Erich**
**Lupinenweg 5**
**D-7143 Vaihingen/Enz 3 (DE)**
Erfinder : **GOELZER, Thomas**
**Gartenstrasse 20**
**D-7141 Schwieberdingen (DE)**
Erfinder : **KARL, Otto**
**Kleiststrasse 9**
**D-7250 Leonberg-Hoefingen (DE)**
Erfinder : **STREIB, Martin**
**Schiltacher Strasse 35**
**D-7000 Stuttgart (DE)**
Erfinder : **LOHSE, Mathias**
**Panoramastrasse 78**
**D-7016 Gerlingen (DE)**
Erfinder : **KELLER, Frieder**
**Hofaeckerstrasse 19**
**D-7526 Ubstadt-Weiher (DE)**

## Beschreibung

Die Erfindung betrifft einen elektronischen Zähler mit einer Zählschaltung und einem dieser vorgeschalteten Frequenzteiler.

Elektronische Zähler werden in der Technik auf vielerlei Gebieten eingesetzt. Sie dienen der quantitativen Erfassung eines sich stets wiederholenden Vorgangs. Die Zählfunktion wird durch Anlegen einer ereignisabhängigen Taktfrequenz an den Eingang einer zum Zähler gehörenden Zählschaltung ausgelöst. Sofern eine Ereignisbewertung stattfinden soll, wird der Zählschaltung ein Frequenzteiler vorgeschaltet. Dieses hat zur Folge, daß die Taktfrequenz in einem fest vorgegebenem Verhältnis herabgesetzt wird, so daß die Zählschaltung entsprechend "langsamer" zählt. Ein derartiger Zähler läßt sich seinem jeweiligen Einsatzgebiet aufgrund des vorgeschalteten Frequenzteilers individuell anpassen. Sofern jedoch während des Einsatzes eine Neuabstimmung oder aber auch eine kontinuierliche Anpassung erforderlich wird, ist der beschriebene, bekannte Zähler hierzu nicht geeignet.

Aus der DE-OS 24 15 939 ist bereits eine Einrichtung bekannt, die in Abhängigkeit winkelabhängiger Impulse winkelabhängige Vorgänge steuert. Hierbei wird im Bereich der Kurbelwelle ein Sensor angebracht, der anhand der Zeit $t_e$ zwischen dem Passieren von zwei aufeinanderfolgenden Marken eine Drehzahl bestimmt. Gleichzeitig ist die Winkeleinheit zwischen zwei Marken bekannt, so daß anhand der Zeit $t_e$, die zum Durchlaufen der Winkeleinheit benötigt wird, das Verhältnis Winkeleinheit und zugehörige Zeit bestimmt werden kann. Aus diesem bekannten Verhältnis wird in einem Steuergerät die Zeit $t_s$ bestimmt, die verstreichen muß, um ein Signal auszugeben, das aufgrund des Winkels, der in dieser Zeit $t_s$ erreicht ist, zur Steuerung bestimmter winkelabhängiger Betriebsvorgänge notwendig ist. Zur Realisierung des eben erläuterten Verfahrens wird der Zähler beim Passieren einer Marke jedesmal mit Hilfe eines RESET-Eingangs auf Null gesetzt und der Zählvorgang beginnt erneut.

## Vorteile der Erfindung

Der erfindungsgemäße Zähler mit den im Hauptanspruch genannten Merkmalen hat demgegenüber den Vorteil, daß seine Ganggeschwindigkeit variabel ist. Hierzu weist er einen einstellbaren Frequenzteiler auf, der zwei Eingänge besitzt. Dem einen, ersten Eingang wird vorzugsweise eine konstante Frequenz zugeführt. Diese wird mittels eines Faktors bewertet. Die Größe des Faktors, also die Bewertung, ist durch ein Ganggeschwindigkeitssignal frei vorgebbar. Das Gangeschwindigkeitssignal wird an einen zweiten Eingang des Frequenzteilers in beliebigen Zeitabständen angelegt. Der das Teilerverhältnis bestimmende Faktor behält stets solange seinen momentanen Wert, bis durch das Zuführen eines gegenüber dem momentanen Ganggeschwindigkeitssignal abweichenden Ganggeschwindigkeitssignals eine Änderung eintritt. Diese Änderung führt zu einem anderen Teilerverhältnis, so daß der elektronische Zähler individuell seinem speziellen Einsatzgebiet angepaßt werden kann, wobei diese Anpassung auch während des Betriebes möglich ist.

Nach einer Weiterbildung der Erfindung ist vorgesehen, daß die Frequenz durch den Faktor geteilt wird, der aus dem Quotienten einer Konstanten und dem Ganggeschwindigkeitssignal gebildet ist. Mithin wird die Frequenz -die vorzugsweise konstant ist- mit dem Ganggeschwindigkeitssignal multipliziert und durch die Konstante dividiert, die eine schaltungsspezifische Größe ist. Das Zählergebnis ist somit einerseits von der Frequenz und andererseits von dem vorgegebenen Ganggeschwindigkeitssignal abhängig.

Vorzugsweise ist vorgesehen, daß die dem ersten Eingang zugeführte Frequenz die Taktfrequenz einer Taktschaltung ist.

Nach einer Weiterbildung der Erfindung läßt sich das Ganggeschwindigkeitssignal von außen digital vorgeben. Der Fehler läßt sich hierdurch sozusagen "ferngesteuert" an die individuellen Gegebenheiten anpassen.

Die Erfindung betrifft ferner einen elektronischen Zähler mit einer Zählschaltung, der eine Nachführschaltung vorgeschaltet ist. Diese Nachführschaltung bewirkt, daß in Abhängigkeit eines vorgebbaren Korrektursignals eine bestimmte Anzahl von ihr zugeführten Impulsen unterdrückt oder eine zusätzliche Anzahl von Impulsen eingefügt wird. Hierdurch ist eine kontinuierliche Nachführung des Zählerstandes realisiert. Dabei ist sichergestellt, daß die Zählfolge erhalten bleibt, also kein Zählwert übersprungen wird.

Nach einer bevorzugten Ausführungsform der Erfindung ist die Nachführschaltung zwischen den Frequenzteiler und die Zählschaltung geschaltet. Ein derartiger Zähler weist somit eine variable Ganggeschwindigkeit und eine kontinuierliche Verstellmöglichkeit auf.

Besonders vorteilhaft ist es, wenn der Zählerstand - unabhängig vom jeweils vorliegenden Stand - sich auf einen von außen vorgebbaren Setzwert stellen läßt.

Die Ausbildung kann vorzugsweise derart gewählt sein, daß der Ausgang der Zählschaltung an einen Rücksetz-Vergleicher angeschlossen ist, der bei Gleichheit des Zählerstands mit einem vorgebbaren Sollwert ein Reset-Impuls abgibt und diesem der Zählschaltung zum Rücksetzen des Zählerstands zuführt. Hierdurch ist eine Periodizität erzielt, die durch Vorgabe des Sollwertes einstellbar ist. Das durch die Abgabe des Reset-Impulses bewirkte Rücksetzen des

Zählers erfolgt vorzugsweise auf den Zählerstand "0".

Ferner ist es möglich, daß der Ausgang der Zählschaltung an einen Interrupt-Vergleicher angeschlossen ist, der bei Gleichheit des Zählerstands mit einem vorgegebenen Vergleichswert einen Interrupt-Impuls abgibt. Die Abgabe läßt sich durch Vorwahl des Vergleichswerts einstellen. Mit dem Interrupt-Impuls lassen sich individuelle Funktionen bei bestimmten Zählerständen auslösen.

Nach einem bevorzugten Ausführungsbeispiel ist der Zähler an einen seriellen Datenbus angeschlossen. Über den Datenbus wird das Ganggeschwindigkeitssignal zugeführt. Dieser Busanschluß hat den Vorteil, daß nur eine geringe Anzahl von elektrischen Leitungen erforderlich ist und daß über einen derartigen Datenbus neben der Ganggeschwindigkeits-Information auch noch weitere Informationen geleitet werden können.

Der Erfindungsgegenstand zeichnet sich ferner durch einen Drehwinkelgeber aus, der aus den von einem Aggregat aufgenommenen Winkelinformationen einer Welle oder dergleichen Drehzahldaten bildet und diese über den Datenbus dem Frequenzteiler als Ganggeschwindigkeitssignal über seinen zweiten Eingang zuführt. Der Zähler ermöglicht somit die Nachbildung des Drehwinkels des erwähnten Aggregats, das heißt, der jeweils vorliegende Zählerstand entspricht einem bestimmten Drehwinkel. Da die Drehzahldaten in den genannten Datenbus eingespeist werden, können ohne weiteres auch mehrere mit dem Datenbus verbundene Zähler - beispielsweise an verschiedenen Orten oder zur Steuerung verschiedener Funktionen - eingesetzt werden, die die jeweiligen Winkelstellungen des Aggregats nachbilden. Hierbei ist jedoch nur ein Drehwinkelgeber und nur ein sehr geringer Verkabelungsaufwand erforderlich. Die vom Drehwinkelgeber stammenden Informationen bestimmen die Ganggeschwindigkeit des Zählers. Dies bedeutet, daß der an sich frei laufende Zähler lediglich von Zeit zu Zeit durch das Ganggeschwindigkeitssignal synchronisiert wird, so daß sein eine Winkelstellung darstellender Zählerstand mit der jeweiligen Winkelstellung des Aggregats übereinstimmt. Der Datenbus wird somit kaum belastet, so daß seine Kapazität auch für andere Funktionen genutzt werden kann.

Vorzugsweise wird eine derartige Anordnung in der Kraftfahrzeugelektronik eingesetzt. Für die Kraftstoffeinspritzung und/oder Zündung sind mehrere Steuergeräte vorgesehen, die an einen Datenbus angeschlossen sind (CAN = Controller Area Network). Ferner ist ein Drehwinkelgeber vorgesehen, der die Winkelstellung der Kurbelwelle einer Brennkraftmaschine des Kraftfahrzeugs erfaßt und seine vorzugsweise die Drehzahl der Kurbelwelle betreffenden Daten in den Datenbus einspeist. Die erwähnten Steuergeräte weisen jeweils - wie beschrieben - einen erfindungsgemäßen Zähler auf, so daß jeweils eine Kurbelwellenwinkel-Information zur Verfügung gestellt werden kann. Hierdurch kann auf Steuergeräte mit eigenem Kurbelwellen-Winkelsensor verzichtet werden. Erfindungsgemäß ist lediglich ein einziger derartiger Sensor (Drehwinkelgeber) notwendig, der aufgrund des Datenbus-Anschlusses auf einfache, Verbindungskabel einsparende Weise mit der erforderlichen Anzahl von Steuergeräten verbunden ist.

Sofern der oder die genannten Zähler zum Originalwinkel der Kurbelwelle synchronisiert und die Periodizität so eingestellt ist, daß ein Rücksetzen zum Beispiel bei Erreichen von 360° (oder 720° bei Kurbelwellenwinkeln von Viertaktmotoren) erfolgt, simuliert der Zählerstand den Original-Kurbelwellenwinkel. Ein derartig arbeitender Zähler kann demgemäß auch als "Winkeluhr" bezeichnet werden.

Vorteilhafte Weiterbildungen der Erfindung sind in den Unteransprüchen gekennzeichnet.

Zeichnung

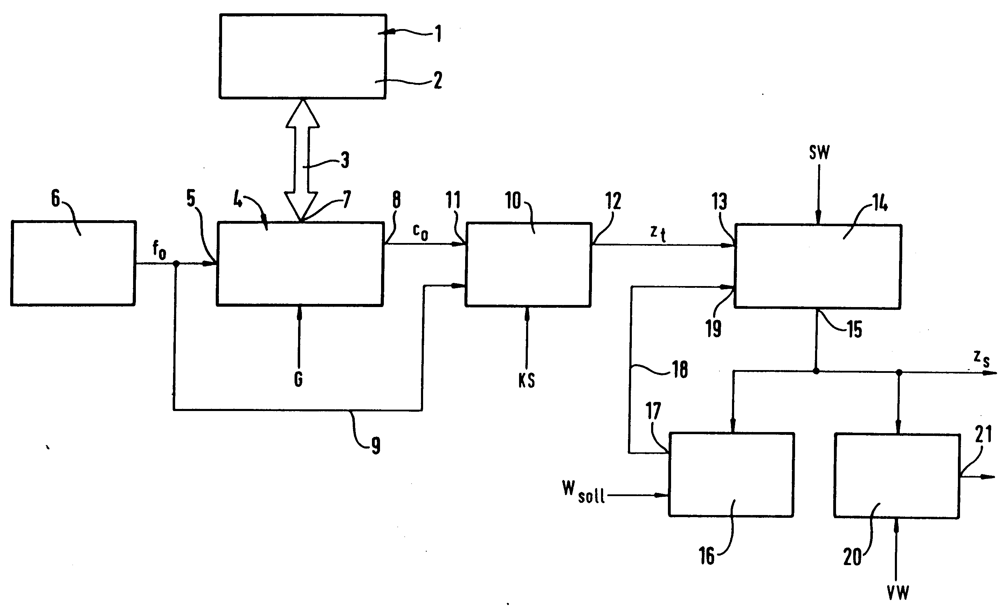

Die Erfindung wird im folgenden anhand der Figur näher erläutert. Diese zeigt ein Blockschaltbild des erfindungsgemäßen elektronischen Zählers.

Das in der Figur dargestellte Blockschaltbild weist einen Sensor 1 auf, der als Drehwinkelgeber 2 ausgebildet ist und die Winkelstellung einer nicht dargestellten Kurbelwelle einer Brennkraftmaschine erfaßt. Aus dem zeitlichen Verlauf des Drehwinkels bildet der Drehwinkelgeber 2 die Drehzahl der Kurbelwelle. Die so gebildeten Drehzahldaten werden als Ganggeschwindigkeitssignal n in einen Datenbus 3 eingespeist. Der Datenbus 3 ist an einen einstellbaren Frequenzteiler 4 angeschlossen. Dieser weist zwei Eingänge auf, wobei der eine, erste Eingang 5 mit einer Taktschaltung 6 in Verbindung steht und der andere, zweite Eingang 7 an den Datenbus 3 angeschlossen ist. Ferner weist der Frequenzteiler 4 einen Ausgang 8 auf.

Die Taktschaltung 6 liefert an den ersten Eingang 5 des Frequenzteilers 4 eine konstante Frequenz $f_o$. Diese kann ferner über eine Leitung 9 zu einer Nachführschaltung 10 übertragen werden. Diese besitzt einen Anschluß 11, der mit dem Ausgang 8 des Frequenzteilers 4 verbunden ist. Der Nachführschaltung 10 ist ein vorgebbares Korrektursignal KS zuführbar.

Der Ausgang 12 der Nachführschaltung 10 führt zu einem Eingang 13 einer Zählschaltung 14. Dieser kann ein Setzwert SW zugeführt werden. Der Ausgang 15 der Zählschaltung 14 ist an einen Rücksetz-Vergleicher 16, dem ein Sollwert $W_{soll}$ zuführbar ist, angeschlossen. Der Ausgang 17 des Rücksetz-Vergleichers 16 führt über eine Leitung 18 zu einem Rücksetzeingang 19 der Zählschaltung 14.

Der Ausgang 15 der Zählschaltung 14 führt ferner zu einem Interrupt-Vergleicher 20, dem ein Vergleichswert VW zuführbar ist. Ferner besitzt der Interrupt-Vergleicher 20 einen Interrupt-Ausgang 21.

Wie bereits erwähnt, leitet der Sensor 1 dem Datenbus 3 Ganggeschwindigkeitssignale n zu, die der Drehzahl der Kurbelwelle entsprechen. Diese Ganggeschwindigkeitssignale n stehen somit am zweiten Eingang 7 des Frequenzteilers 4 zur Verfügung. Die Taktschaltung 6 führt dem ersten Eingang 5 des Frequenzteilers 4 die Frequenz $f_o$ zu. Der Frequenzteiler 4 bildet an seinem Ausgang 8 eine Impulsfrequenz $c_o$, die sich wie folgt ergibt

$$c_o = \frac{f_o}{K} \cdot n,$$

wobei K eine schaltungsspezifische Konstante ist. Da die Taktschaltung 6 eine konstante Frequenz $f_o$ vorgibt, läßt sich die Impulsfrequenz $c_o$ durch Variation des Ganggeschwindigkeitssignals n verändern. Mithin ist das Teilerverhältnis des Frequenzteilers 4 einstellbar, so daß die Ganggeschwindigkeit der nachfolgenden Zählschaltung 14 variabel eingestellt werden kann.

Die Nachführschaltung 10 bildet aus der Impulsfrequenz $c_o$ einen dem Eingang 13 der Zählschaltung 14 zugeführten Zähltakt $z_t$. Dieser ist im Normalfall, das heißt, wenn kein Korrektursignal KS eintrifft, gleich der Impulsfrequenz $c_o$. Trifft ein Korrektursignal, bestehend aus einer ganzen positiven oder negativen Zahl KS ein, so wird der Zahltakt $Z_t$ dadurch erzeugt, daß bei positivem KS in die Impulsfrequenz $c_o$ noch KS zusätzliche Impulse eingebracht werden, oder, bei negativem KS, eine dem Betrag von KS entsprechende Zahl von Impulsen unterdrückt wird. Das Eintreffen eines Korrektursignals KS hat also zur Folge, daß der Zahltakt $Z_t$ nicht mehr streng periodisch ist.

Je nach dem, ob das Korrektursignal KS eine positive oder negative ganze Zahl ist, erfolgt demgemäß eine kontinuierliche Verstellung des Zählerstandes $z_s$ der Zählschaltung 14, wobei sich bei positiver ganzer Zahl eine erhöhte Zählgeschwindigkeit und bei negativer ganzer Zahl ein Zählerstillstand einstellt und wobei die Zählbeschleunigung bzw. die Stillstandszeit von der Größe des Korrektursignales KS abhängig ist. Der Zähler läuft also bei positivem Korrektursignal KS solange mit erhöhter Zählgeschwindigkeit, bis er - verglichen mit dem Fall, daß keine Verstellung erfolgen würde, um genau diese Zahl vorgeht. Bei negativem Korrektursignal KS bleibt der Zähler solange stehen, bis er - ebenfalls verglichen mit Fall, daß keine Verstellung erfolgen würde - um genau diese Zahl nachgeht.

Der am Ausgang 15 der Zählschaltung 14 anstehende Zählerstand $z_s$ wird - wie aus der Figur ersichtlich - dem Rücksetz-Vergleicher 16 zugeführt und dort mit dem einstellbaren Sollwert $W_{soll}$ verglichen. Sobald die von den beiden Signalen gebildeten Eingangswerte gleich groß sind, wird auf der Leitung 18 ein Reset-Impuls abgegeben, wodurch der Zähler auf seinen Anfangswert zurückgesetzt wird. Über den Setzwert SW kann ein bestimmter Zählerstand vorgegeben werden.

Der Ausgang 15 ist ferner an einen Interrupt-Vergleicher 20 angeschlossen, der den Zählerstand $z_s$ mit einem Vergleichswert VW vergleicht. Liegt Gleichheit vor, so wird am Interrupt-Ausgang 21 ein Interrupt-Signal abgegeben.

Mit Bezug auf die Erfassung des Kurbelwellenwinkels der zuvor erwähnten Brennkraftmaschine wird sich die Ganggeschwindigkeit n der Zählschaltung 14 proportional zur Drehzahl einstellen. Damit stellt der Zählerstand $z_s$ jeweils ein Winkelmaß dar. Wird der Zähler einmal auf den absoluten Kurbelwellenwinkel (Originalwinkel) synchronisiert und die Periodizität durch Vorgabe des Sollwertes $W_{soll}$ derart eingestellt, daß der Zähler bei 360° Originalwinkel (oder 720° Originalwinkel bei Kurbelwellen von Viertaktmotoren) wieder auf Null bzw. seinen Setzwert SW springt, simuliert der Zählerstand $z_s$ den Originalwinkel.

Durch Quantisierungsfehler, Frequenzschwankungen der Taktschaltung 6 und insbesondere Änderungen der Drehzahl der Kurbelwelle usw. können Originalwinkel und Winkeluhr (Zählerstand) auseinanderdriften. Von Zeit zu Zeit muß daher eine neue Synchronisation erfolgen.

Dieses ist beispielsweise durch ein entsprechendes Korrektursignal KS an der Nachführschaltung 10 möglich.

Mittels des Interrupt-Vergleichers 20 läßt sich durch Vorgabe einer oder mehrerer Vergleichswerte VW in jeweils gewünschten Kurbelwellen-Stellungswinkeln ein Interrupt-Signal am Interrupt-Ausgang 21 erzeugen. Auf diese Art und Weise können gewünschte Kurbelwellen-Stellungen erfaßt werden.

Der erfindungsgemäße Zähler kann aufgrund seiner variablen Ganggeschwindigkeit und der kontinuierlichen Verstellbarkeit auf vielerlei Gebieten eingesetzt werden. Sollen beispielsweise bestimmte Funktionen periodisch getriggert werden, so ist die Periodizität variabel von außen einstellbar. Der Zähler zählt beispielsweise stets von 0 bis 99, wobei immer beim Zählerstand 50 eine Funktion ausgelöst werden soll (Periode). Je nach Wahl der Ganggeschwindigkeit kann die Zeit, die der Zähler für eine Periode benötigt, beliebig vorgewählt werden.

Die kontinuierliche Verstellbarkeit des Zählers ermöglicht es, daß bei einer durch die Nachführschaltung 10 vorgenommenen Verstellung um mehr als nur eine Einheit (Zählerstand $z_s$) kein Zwischenwert ausgelassen wird. Insofern können beispielsweise Compare-Register zur Triggerung von Funktionen eingesetzt werden. Der Triggerwert (im obigen Beispiel "50") wird in ein Compare-Register eingeschrieben. Sobald der Zähler diesen Wert erreicht hat, wird die Funktion ausgelöst. Bekannte, nicht kontinuierlich verstellbare Zähler, würden beispielsweise bei einem Zählerstand von 48 bei einem Vorstellen um vier Einheiten direkt von 48 auf 52 springen. Das heißt der Wert 50 würde also ausgelassen werden, was zur Folge hätte, daß die zu triggernde Funktion nicht ausgelöst wird.

Mit Bezug auf das zuvor erläuterte Anwendungsbeispiel zur Erfassung eines Kurbelwellenwinkels läßt sich über den Setzwert SW der Absolutwinkel $\Phi_{abs}$ vorgeben. Eine aufgetretene Winkeldifferenz zwischen Originalwinkel und simuliertem Winkel ist durch das Korrektursignal KS aufhebbar. Insofern bietet das Korrektursignal KS die Möglichkeit eine Vor-/bzw. Zurückstelldifferenz $\delta\Phi$ vorzugeben. Um bestimmte Kurbelwellenstellungen zu erfassen, kann mittels des Vergleichswertes VW ein Interrupt-Auslösewinkel $\Phi_{int}$ vorgegeben werden. Da der Zählerstand $z_s$ dem aktuellen Winkel $\Phi_{akt}$ entspricht, wird ein Interrupt-Signal stets dann ausgegeben, wenn $\Phi_{int} = \Phi_{akt}$ ist.

Das Einlesen der Größen zur Einstellung der Winkeluhr (Drehzahl n, Winkelsetzwert $\Phi_{abs}$, Vor-/Zurückstelldifferenz $\delta\Phi$, Interrupt-Auslösewinkel $\Phi_{int}$) geschieht vorzugsweise durch Ankopplung eines parallelen Busses eines in dem beschriebenen Steuergerät jeweils vorhandenen Prozessorbausteins. Der Zählerstand $z_s$ (aktueller Winkelwert $\Phi_{akt}$) ist ebenfalls über diesen Bus auslesbar. Die Übertragung der Einstellgrößen von einem Steuergerät zu einem anderen Steuergerät erfolgt dagegen vorzugsweise über einen seriellen Bus.

**Patentansprüche**

1. Elektronischer Zähler mit einer Zählschaltung (14) zum Zählen von Taktsignalen eines Taktgebers (6), wobei zwischen Taktgeber (6) und Zählschaltung (14) ein einstellbarer Frequenzteiler (4) geschaltet ist, das Teilerverhältnis des Frequenzteilers (4) in Abhängigkeit von den Drehzahldaten veränderbar ist und wobei das Ausgangssignal der Zählschaltung (14) die Nachbildung eines Drehwinkels ist und in etwa einem bestimmten Original-Drehwinkel entspricht und in Abhängigkeit des von der Zählschaltung (14) simulierten Drehwinkels Funktionen auslösbar sind, mit einem Setzwerteingang (SW) für die Zählschaltung (14) und mit einem anschließbaren Drehwinkelgeber (2), dadurch gekennzeichnet, daß die vom Drehwinkelgeber (2) abgegebenen Signale in Drehzahldaten umwandelbar und über einen Datenbus (3) an den elektronischen Zähler übertragbar sind, und einer dem Frequenzteiler (4) nachgeschalteten Nachführschaltung (10) ein Korrektursignal (KS) zugeführt ist, wobei auf Grund des Korrektursignals (KS) Impulse einfügbar oder unterdrückbar sind, und daß dieses Korrektursignal mittels der Winkeldifferenz des durch den Setzwert (SW) gegebenen Absolutwinkel und des durch die Zählschaltung (14) simulierten Winkels gegeben ist.

2. Elektronischer Zähler nach Anspruch 1, dadurch gekennzeichnet, daß das winkelabhängige Signal über den Datenbus (3) an beliebig viele Zählschaltungen übertragbar ist.

3. Elektronischer Zähler nach einem der vorherigen Ansprüche, dadurch gekennzeichnet, daß der Ausgang (15) des Zählers (14) an einen Rücksetz-Vergleicher (16) angeschlossen ist, der bei Gleichheit des Zählerstandes ($z_s$) mit einem vorgebbaren Sollwert ($W_{soll}$) einen RESET-Impuls abgibt und diesen dem Zähler (14) zum Rücksetzen des Zählerstandes ($z_s$) zuführt.

4. Elektronischer Zähler nach einem der vorherigen Ansprüche, dadurch gekennzeichnet, daß der Ausgang (15) des Zählers (14) an einen Interruptvergleicher (20) angeschlossen ist, der bei Gleichheit des Zählerstandes ($z_s$) mit einem vorgebbaren Vergleichwert (VW) einen Interrupt-Impuls abgibt.

5. Elektronischer Zähler nach einem der vorhergehenden Änsprüche, dadurch gekennzeichnet, daß der elektronische Zähler zur Steuerung von Betriebsvorgängen einer Brennkraftmaschine in einem Kraftfahrzeug dient.

6. Elektronischer Zähler nach Anspruch 5, dadurch gekennzeichnet, daß der Drehwinkelgeber der Kurbelwinkelgeber eines Kraftfahrzeugs ist.

**Claims**

1. Electronic counter having a counting circuit (14) for counting clock signals of a clock generator (6), a frequency divider (4) which can be adjusted being wired between clock generator (6) and counting circuit (14), the division ratio of the frequency divider (4) being variable as a function of the speed data and the output signal of the counting circuit (14) being the simulation of a rotation angle and corresponding approximately to a specific original rotation angle and it being possible to trigger functions as a function of the rotation angle simulated by the counting circuit (14), having a set value input (SW) for the counting circuit (14) and having a rotation angle transmitter (2) which can be connected, characterized in that the signals emitted by the rotation angle transmitter (2) can be converted to speed data and can be transmitted to the electronic counter via a databus (3), and a correction signal (KS) is supplied to a follow-up circuit (10) which is wired downstream of the frequency divider (4), it being possible to inject or suppress pulses on the basis of the correction signal (KS), and in that this correction signal is given using the difference in angle between the absolute angle given by the set value (SW) and the angle simulated by the counting circuit (14).

2. Electronic counter according to Claim 1, characterized in that the signal which is a function of the angle can be transmitted to any desired number of counting circuits via the databus (3).

3. Electronic counter according to one of the preceding claims, characterized in that the output (15) of the counter (14) is connected to a reset comparator (16) which emits a RESET pulse in the case of the counter reading ($Z_s$) and a desired value ($W_{soll}$), which can be predetermined, being identical, and supplies this pulse to the counter (14) for the purpose of resetting the counter reading ($Z_s$)

4. Electronic counter according to one of the preceding claims, characterized in that the output (15) of the counter (14) is connected to an interrupt comparator (20) which emits an interrupt pulse in the case of the counter reading ($Z_s$) and a comparison value (VW), which can be predetermined, being identical.

5. Electronic counter according to one of the preceding claims, characterized in that the electronic counter serves for controlling operation processes of an internal combustion engine in a motor vehicle.

6. Electronic counter according to Claim 5, characterized in that the rotation angle transmitter is the crank angle transmitter of a motor vehicle.

## Revendications

1. Compteur électronique comportant un circuit de comptage (14) pour compter les signaux d'horloge fournis par un générateur d'horloge (6), et entre le générateur d'horloge (6) et le circuit de comptage (14) se trouve un diviseur de fréquence (4) réglable, le rapport de division du diviseur de fréquence (4) étant variable en fonction des données de vitesse de rotation et le signal de sortie du circuit de comptage (14) copie un angle de rotation et correspond sensiblement à un certain angle de rotation d'origine et en fonction de l'angle simulé par le circuit de comptage (14) on déclenche des fonctions, avec une entrée de mise à l'état (SW) pour le circuit de comptage (14) et un générateur d'angle de rotation (2) susceptible d'être relié à ce circuit, compteur électronique caractérisé en ce que les signaux émis par le générateur d'angle de rotation (2) peuvent être transformés en des données de vitesse de rotation pour être transmis par un bus de données (4) à un compteur électronique et un circuit d'asservissement (10) en aval du diviseur de fréquence (4) reçoit un signal de correction (KS), ce signal de correction (KS) insérant ou supprimant des impulsions et ce signal de correction est donné par la différence d'angle entre l'angle absolu donné par la valeur de mise à l'état (SW) et de l'angle simulé par le circuit de comptage (14).

2. Compteur électronique selon la revendication 1, caractérisé en ce que le signal dépendant de l'angle est transmis à un nombre quelconque de circuits de comptage par le bus de données (3).

3. Compteur électronique selon l'une des revendications précédentes, caractérisé en ce que la sortie (15) du compteur (14) est reliée à un comparateur de remise à l'état initial (16) émettant une impulsion de remise à l'état initial (RESET) lorsque l'état de comptage ($z_s$) est égal à une valeur prédéterminée ($W_{cons}$) et transmet cette impulsion au compteur (14) pour remettre son état de comptage ($z_s$) à son état initial.

4. Compteur électronique selon l'une des revendications précédentes, caractérisé en ce que la sortie (15) du compteur (14) est reliée à un comparateur d'interruption (20) qui émet une impulsion d'interruption lorsque l'état de comptage ($z_s$) est égal à une valeur de comparaison (VW) prédéterminée.

5. Compteur électronique selon l'une des revendications précédentes, caractérisé en ce que le compteur électronique sert à commander les opérations de fonctionnement d'un moteur à combustion interne d'un véhicule automobile.

6. Compteur électronique selon la revendication 5, caractérisé en ce que le capteur d'angle de rotation est le capteur d'angle de vilebrequin d'un véhicule automobile.

7